(19) Europäisches Patentamt
European Patent Office
Office européen des brevets

(11) EP 3 725 549 B1

(12) # EUROPEAN PATENT SPECIFICATION

(45) Date of publication and mention of the grant of the patent:
**07.02.2024 Bulletin 2024/06**

(21) Application number: **18888920.8**

(22) Date of filing: **11.12.2018**

(51) International Patent Classification (IPC):
***B60C 11/00*** *(2006.01)* ***B60C 1/00*** *(2006.01)*
***C08L 9/06*** *(2006.01)*

(52) Cooperative Patent Classification (CPC):
**B60C 11/0041; B60C 1/00; B60C 1/0016; B60C 11/00; B60C 11/0058; C08L 9/06;**
B60C 2011/0025; B60C 2200/10

(86) International application number:
**PCT/JP2018/045574**

(87) International publication number:
**WO 2019/117173 (20.06.2019 Gazette 2019/25)**

(54) **TIRE FOR TWO-WHEELED VEHICLE**

REIFEN FÜR ZWEIRADFAHRZEUG

PNEU POUR VÉHICULE À DEUX ROUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2017 JP 2017238109**

(43) Date of publication of application:
**21.10.2020 Bulletin 2020/43**

(73) Proprietor: **Bridgestone Corporation**
**Chuo-Ku**
**Tokyo 104-8340 (JP)**

(72) Inventor: **MIYAMOTO, Yukari**
**Tokyo 104-8340 (JP)**

(74) Representative: **Marks & Clerk LLP**
**15 Fetter Lane**
**London EC4A 1BW (GB)**

(56) References cited:
**EP-A1- 2 186 653**
**EP-A1- 2 610 077**
**EP-A1- 3 098 088**
**WO-A1-2010/070868**
**WO-A1-2017/204236**
**JP-A- H08 169 208**
**JP-A- H10 119 513**
**JP-A- 2007 223 569**
**JP-A- 2008 179 303**
**JP-A- 2009 173 247**
**JP-A- 2015 137 057**
**JP-A- 2016 112 998**
**JP-A- 2018 188 007**
**US-A1- 2004 118 495**
**US-A1- 2009 107 597**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 725 549 B1

## Description

CROSS-REFERENCE TO RELATED APPLICATION

The present application claims the benefit of priority to Japanese Patent Application No. 2017-238109 filed December 12, 2017.

TECHNICAL FIELD

The present invention relates to a tire for a two-wheel vehicle.

BACKGROUND

Tires for two-wheel vehicles are required to exhibit high gripping performance because inclination of a tire equatorial plane with respect to a road surface becomes large during cornering travel of a vehicle. In addition, the gripping performance is roughly divided into dry gripping performance (steering stability on a dry road surface) and wet gripping performance (performance for braking on a wet road surface).

In addition, since a load per unit area of a tire for a two-wheel vehicle is large, a tread portion (especially, a central portion), which is to be grounded, of a tire for a two-wheel vehicle is required to also exhibit high wear resistance performance.

As described above, it is desired that wear resistance performance, dry gripping performance, and wet gripping performance are highly balanced in a tread portion of a tire for a two-wheel vehicle (for example, PLT 1, PLT 2, PLT 3, PLT 4, PLT 5). While the tire for a two-wheel vehicle of PLT 1 is suitable for use in running a long distance on a public road, there is room for further improvement in dry gripping performance and wet gripping performance during high speed cornering situation.

Then, a technique in which a tread portion is filled with a large amount of a filler has been conventionally studied in order to improve gripping performance at a tread portion of a tire for a two-wheel vehicle during high speed cornering situation. However, this technique has a problem of deterioration of operability during tire production.

A technique in which a tread portion contains resin has also been studied for further improving the above-described gripping performance. However, there is such a problem that gripping performance is poorly exerted (activation performance is poor) because when a tread portion contains resin, a peak temperature of a loss tangent tan $\delta$ of rubber of the tread portion increases.

Therefore, any technique in which dry gripping performance and wet gripping performance are highly balanced without impairing wear resistance performance (especially, wear resistance performance at a central portion of tread) in a tread portion of a tire for a two-wheel vehicle has not been provided yet so far.

CITATION LIST

Patent Literature

PTL 1: Japanese Patent Laid-Open No. 2016-112998
PTL 2: EP 2 610 077 A1
PTL 3: EP 2 186 653 A1
PTL 4: WO 2017/204236 A1
PTL 5: EP 3 098 088 A


SUMMARY

(Technical Problem)

In view of the above, the present invention aims at providing a tire for a two-wheel vehicle in which wear resistance performance, dry gripping performance, and wet gripping performance are highly balanced.

(Solution to Problem)

A tire for a two-wheel vehicle according to the present invention is a tire for a two-wheel vehicle, including a

pair of bead portions, a pair of sidewall portions, and a tread portion continuous with the both sidewall portions, with the tread portion being divided into five portions in a surface of the tread portion by a central portion including a tire equatorial plane, a pair of edge portions including respective tread edges, and a pair of shoulder portions lying between the central portion and the respective edge portions in a tire width direction; wherein each of rubber of the central portion, rubber of the shoulder portions, and rubber of the edge portions contains a rubber component; and when a peak temperature of a loss tangent tan δ of the rubber of the central portion is represented by $T_{p-C}$, a peak temperature of a loss tangent tan δ of the rubber of the shoulder portions is represented by $T_{p-S}$, and a peak temperature of a loss tangent tan δ of the rubber of the edge portions is represented by $T_{p-E}$, $T_{p-C}$, $T_{p-S}$, and $T_{p-E}$ satisfy formula (1) below:

$$T_{p\text{-}S} > T_{p\text{-}E} > T_{p\text{-}C} \cdots (1),$$

when measurement of the peak temperature of a loss tangent tan δ of the rubbers is conducted by using a dynamic spectrometer under the temperature distribution conditions of from -30°C to 60°C, an initial strain of 10%, a dynamic strain of 1%, a frequency of 52 Hz, and a temperature raising rate of 2 °C/min.

Consequently, wear resistance performance, dry gripping performance, and wet gripping performance can be highly balanced. The tire for a two-wheel vehicle according to the present invention has a central portion especially required to exhibit wear resistance performance, shoulder portions especially required to exhibit dry gripping performance and wet gripping performance, and edge portions especially required to exhibit activation performance.

(Advantageous Effect)

According to the present invention, a tire for a two-wheel vehicle in which wear resistance performance (especially, wear resistance performance at a central portion), dry gripping performance, and wet gripping performance are highly balanced can be provided.

BRIEF DESCRIPTION OF THE DRAWINGS

In the accompanying drawings:

FIG. 1 is a schematic diagram illustrating a cross-section in a width direction of a tire for a two-wheel vehicle according to one embodiment of the present invention; and

FIG. 2 is a schematic diagram illustrating a cross-section in a width direction of a tire for a two-wheel vehicle according to another embodiment of the present invention.

DETAILED DESCRIPTION

Hereinafter, embodiments of the present invention will be described.

Herein, a peak temperature of a loss tangent tan δ of tread rubber is measured by a method described in examples.

Herein, dry gripping performance and wet gripping performance are sometimes merely referred to collectively as gripping performance.

Herein, an amount of a component in rubber is an amount contained in rubber of each of a central portion, a shoulder portion, and an edge portion and is not an amount contained in rubber of the whole of a tread portion unless otherwise described.

Herein, Mw is calculated by gel permeation chromatography (GPC) as a standard polystyrene conversion value.

(Tire for two-wheel vehicle)

A tire for a two-wheel vehicle according to the present invention is a tire for a two-wheel vehicle, including a pair of bead portions, a pair of sidewall portions, and a tread portion continuous with the both sidewall portions, with the tread portion being divided into five portions in a surface of the tread portion by a central portion including a tire equatorial plane, a pair of edge portions including respective tread edges, and a pair of shoulder portions lying between the central portion and the respective edge portions in a tire width direction; wherein each of rubber of the central portion, rubber of the shoulder portions, and rubber of the edge portions contains a rubber component; and when a peak temperature of a loss tangent tan δ of the rubber of the central portion is represented by $T_{p-C}$, a peak temperature of a loss tangent tan δ of the rubber of the shoulder portions is represented by $T_{p-S}$, and a peak temperature of a loss tangent tan δ of the rubber of the edge portions is represented by $T_{p-E}$, $T_{p-C}$, $T_{p-S}$, and $T_{p-E}$ satisfy formula (1) below:

$$T_{p\text{-}S} > T_{p\text{-}E} > T_{p\text{-}C} \cdots (1).$$

FIG. 1 is a schematic diagram illustrating a cross-section in a width direction of a tire for a two-wheel vehicle according to one embodiment of the present invention. In FIG. 1, a tire 10 for a two-wheel vehicle includes a pair of bead portions 11, a pair of sidewall portions 12, and a tread portion 13 continuous with the both sidewall portions 12, with the tread portion 13 being divided into five portions in a surface of the tread portion by a central portion 15 including a tire equatorial plane 14, a pair of edge portions 17 including respective tread edges 16, and a pair of shoulder portions 18 lying between the central portion 15 and the respective edge portions 17 in a tire width direction. In the example of FIG. 1, each of the bead portions 11 has a bead core 19 and is provided so that one or more carcass layers 20 toroidally extend between the pair of bead cores 19. The carcass layer 20 is formed by rubber-coating a plurality of carcass cords.
The tread portion 13 extends across the both sidewall portions 12. In the present invention, the tread portion is a divided tread divided into five portions by the central portion, two shoulder portions, and two edge portions as described above.

(Tread portion)

The tread portion is divided into five portions in the surface of the tread portion by the central portion including the tire equatorial plane, the pair of edge portions including the respective tread edges, and the pair of shoulder portions lying between the central portion and the respective edge portions in the tire width direction. In addition, each of the rubber of the central portion, the rubber of the shoulder portion, and the rubber of the edge portion contains a rubber component, and $T_{p\text{-}C}$, $T_{p\text{-}S}$, and $T_{p\text{-}E}$ satisfy formula (1) above. Consequently, wear resistance performance, dry gripping performance, and wet gripping performance can be highly balanced.
Without wishing to be bound by any theory, it is though that the above effect is obtained by virtue of the tread portion divided into five portions classified into three kinds including a central portion, a shoulder portion, and an edge portion, studying performance especially required of each portion, a means for bringing out the performance, and a temperature state of each portion during traveling, and making improvement. More specifically, in the tread divided into five portions, gripping performance during cornering travel is especially required of the edge portions and the shoulder portions, and wear resistance performance is required of the central portion. Then, it is effective to increase a peak temperature of a loss tangent tan $\delta$ of tread rubber for securing gripping performance of the tread rubber. However, when this peak temperature is increased, gripping performance is less likely to be exerted unless a temperature of the rubber is raised, and activation performance is low. In addition, when the above-described peak temperature is increased, there is also such a trouble that an elastic modulus of the tread rubber increases, and the rubber becomes harder and is less likely to follow a shape of a road surface. Meanwhile, it is effective to decrease the peak temperature of the loss tangent tan $\delta$ of the tread rubber for enhancing wear resistance performance of the tread rubber.
Since the edge portions are hardly grounded during straight travel, the surface temperature of the rubber of the edge portions is less likely to increase. Therefore, a setting was configured such that gripping performance is exerted during cornering travel, during which gripping performance is required of the edge portions, even in a state where the surface temperature of the tread rubber is not high without increasing a peak temperature of a loss tangent tan $\delta$ of the rubber at the edge portions.
Then, since the shoulder portions are grounded even during straight travel, temperature thereof is likely to increase during travel, and the shoulder portions are excellent in activation performance even a peak temperature of a loss tangent tan $\delta$ of the rubber at the shoulder portions is high. Therefore, the peak temperature of the loss tangent tan $\delta$ of the rubber of the shoulder portions is set highest in order to exert high gripping performance.
Furthermore, since wear resistance performance is required of the central portion, a peak temperature of a loss tangent tan $\delta$ of the rubber at the central portion is set low in order to exert high wear resistance performance.
While $T_{p\text{-}C}$, $T_{p\text{-}S}$, and $T_{p\text{-}E}$ are not particularly limited as long as $T_{p\text{-}C}$, $T_{p\text{-}S}$, and $T_{p\text{-}E}$ satisfy formula (1) above, $T_{p\text{-}C}$, $T_{p\text{-}S}$, and $T_{p\text{-}E}$ are -40 to 20°C, for example.
In the tire for a two-wheel vehicle according to the present invention, each of the above-described $T_{p\text{-}C}$, $T_{p\text{-}S}$, and $T_{p\text{-}E}$ is preferably within a range of -10 to 5°C.
Consequently, wear resistance performance, dry gripping performance, and wet gripping performance can be highly balanced.
While a difference between the highest $T_{p\text{-}S}$ and the next highest $T_{p\text{-}E}$ is not particularly limited, the difference is 1 to 15°C, for example.
While a difference between $T_{p\text{-}E}$ and the lowest $T_{p\text{-}C}$ is not particularly limited, the difference is 1 to 15°C, for example.

<Rubber component>

Each of the rubber of the central portion, the rubber of the shoulder portions, and the rubber of the edge portions contains a rubber component. The rubber component is not particularly limited as long as $T_{p-C}$, $T_{p-S}$, and $T_{p-E}$ satisfy formula (1) above, and natural rubber (NR), butadiene rubber (BR), styrene-butadiene rubber (SBR), acrylonitrile-butadiene rubber, chloroprene rubber, and modified rubber thereof can be used, for example. One kind of these rubber components may be used alone, or two or more kinds thereof may be used in combination. Incidentally, the phrase "tread rubber of the central portion or the like contains the above-described rubber component" means that said tread rubber includes a vulcanizate of such a rubber component as understood by those skilled in the art.

The rubber component of one or more kinds selected from the rubber of the central portion, the rubber of the shoulder portions, and the rubber of the edge portions preferably includes SBR and a modified conjugated diene-based polymer or a conjugated diene-based polymer described later.

<Styrene-butadiene rubber>

Each of the rubber of the central portion, the rubber of the shoulder portions, and the rubber of the edge portions of the tire for a two-wheel vehicle according to the present invention preferably contains styrene-butadiene rubber as the rubber component.

Consequently, wear resistance performance, dry gripping performance, and wet gripping performance can be highly balanced.

When SBR is used as the rubber component of each rubber of the central portion, the shoulder portions, and the edge portions, a molecular weight of SBR is not particularly limited and is 500,000 or more, 700,000 or more, 900,000 or more, 1,070,000 or more, or 1,100,000 or more and 2,000,000 or less, 1,500,000 or less, 1,250,000 or less, or 1,200,000 or less, for example.

When SBR is used as the rubber component of each rubber of the central portion, the shoulder portions, and the edge portions, a weight-average molecular weight (Mw) of SBR at the central portion is preferably larger than a Mw of SBR at the shoulder portions, and the Mw of SBR at the central portion is preferably 1,070,000 or more, and more preferably 1,100,000 or more from a viewpoint of enhancing wear resistance performance of the rubber of the central portion. The Mw of SBR of the central portion is preferably 1,250,000 or less from a viewpoint of not impairing wet gripping performance of the rubber of the central portion.

When SBR is used as the rubber component of each rubber of the central portion, the shoulder portions, and the edge portions, a weight-average molecular weight of styrene-butadiene rubber of the rubber of the edge portions is preferably larger than a weight-average molecular weight of styrene-butadiene rubber of the rubber of the central portion or a weight-average molecular weight of styrene-butadiene rubber of the rubber of the shoulder portions.

Consequently, activation performance of the edge portions can be further enhanced.

Other factors affecting the peak temperature of the tan $\delta$ of rubber include a styrene content and a vinyl content in styrene-butadiene rubber.

When the rubber component contains SBR, a content thereof is not particularly limited and may be appropriately adjusted. For example, when the rubber component of each portion contains SBR, the content thereof may be 50 parts by mass or more, 70 parts by mass or more, 80 parts by mass or more, 85 parts by mass or more, or 90 parts by mass or more and 90 parts by mass or less, 85 parts by mass or less, 80 parts by mass or less, 70 parts by mass or less, or 60 parts by mass or less based on 100 parts by mass of the rubber component of each portion.

When the rubber component includes SBR and the modified conjugated diene-based polymer or the conjugated diene-based polymer described later as described above, a total mass of SBR and the modified conjugated diene-based polymer or the conjugated diene-based polymer is 70 parts by mass or more, 80 parts by mass or more, 90 parts by mass or more, or 100 parts by mass based on 100 parts by mass of the rubber component, for example.

<Modified conjugated diene-based polymer>

In the tire for a two-wheel vehicle according to the present invention, each of the rubber of the central portion, the rubber of the shoulder portions, and the rubber of the edge portions preferably contains a modified conjugated diene-based polymer as the rubber component.

Consequently, wear resistance performance, dry gripping performance, and wet gripping performance can be balanced at a higher level. One kind of the modified conjugated diene-based polymer may be used alone or two or more kinds thereof may be used in combination.

When the rubber component contains the modified conjugated diene-based polymer, a content thereof is not particularly limited and may be appropriately adjusted. When the rubber component contains the modified conjugated diene-based polymer, the content thereof is preferably 10 parts by mass or more based on 100 parts by mass of the

rubber component. Consequently, a filler such as silica can be well dispersed in rubber, and wear resistance performance of rubber can be enhanced. In addition, the content of the modified conjugated diene-based polymer is preferably 50 parts by mass or less based on 100 parts by mass of the rubber component from a viewpoint of strength of rubber and wet gripping performance.

The content of the modified conjugated diene-based polymer in the rubber of the central portion is preferably 10 to 50 parts by mass and more preferably 15 to 40 parts by mass based on 100 parts by mass of the rubber component.

The content of the modified conjugated diene-based polymer in the rubber of the shoulder portions is preferably 10 to 30 parts by mass and more preferably 15 to 20 parts by mass based on 100 parts by mass of the rubber component.

The content of the modified conjugated diene-based polymer in the rubber of the edge portions is preferably 10 to 30 parts by mass and more preferably 10 to 20 parts by mass based on 100 parts by mass of the rubber component.

The amount of the modified conjugated diene-based polymer contained in the rubber of the central portion is preferably larger than the amount of the modified conjugated diene-based polymer contained in the rubber of the shoulder portions from a viewpoint of enhancing wear resistance performance of the central portion.

The modified conjugated diene-based polymer is a conjugated diene-based polymer having a modifying functional group. A method for introducing the modifying functional group into the conjugated diene-based polymer is not particularly limited and can be appropriately selected according to a purpose, and examples thereof include a method using a functional group-containing polymerization initiator, a method of copolymerizing a functional group-containing monomer with another compound, and a method of reacting a modifier with a polymer terminal of the conjugated diene-based polymer. The conjugated diene-based polymer is firstly described.

<Conjugated diene-based polymer>

Herein, the conjugated diene-based polymer means a homopolymer of a conjugated diene compound or a copolymer of a conjugated diene compound and a non-conjugated diene compound. The polymer may be obtained through anionic polymerization or may be obtained through coordination polymerization. One kind of the conjugated diene-based polymer may be used alone, or two or more kinds thereof may be used in combination.

A monomer of the conjugated diene compound is not particularly limited and can be appropriately selected according to a purpose, and examples thereof include a non-cyclic monomers such as 1,3-butadiene, isoprene, 1,3-pentadiene, 2,3-dimethyl-1,3-butadiene, 1,3-hexadiene, and chloroprene. One kind of them may be used alone, or two or more kinds thereof may be used in combination.

The non-conjugated diene compound is a polymerizable compound other than conjugated diene compounds, the polymerizable compound being capable of being copolymerized with a conjugated diene compound. The non-conjugated diene compound is not particularly limited and can be appropriately selected according to a purpose, and examples thereof include non-cyclic monomers such as ethylene, propylene, 1-butene, 1-pentene, 1-hexene, 1-heptene, and 1-octene; and aromatic vinyl monomers such as styrene, α-methylstyrene, p-methylstyrene, vinyltoluene, and vinyl naphthalene. One kind of them may be used alone, or two or more kinds thereof may be used in combination.

The conjugated diene-based polymer is preferably butadiene rubber (BR). The modified conjugated diene-based polymer is preferably modified butadiene rubber from a viewpoint of wear resistance performance.

<Modifying functional group>

The modifying functional group is not particularly limited and can be appropriately selected according to a purpose. Examples of the modifying functional group include a functional group including at least one kind of atom selected from the group consisting of a nitrogen atom, a silicon atom, an oxygen atom, and a tin atom. In addition, the modifying functional group preferably includes at least one kind of atom selected from the group consisting of a nitrogen atom, a silicon atom, and an oxygen atom from a viewpoint of imparting good wear resistance performance, high reinforcing performance, high elasticity, and the like to rubber by enhancing interaction between the modified conjugated diene-based polymer and a filler such as silica and carbon black.

- Modifying functional group including nitrogen atom -

The modifying functional group including a nitrogen atom is not particularly limited and can be appropriately selected according to a purpose. Examples of the modifying functional group including a nitrogen atom include a substituted amino group represented by formula (I): $(R^{11})_2N$-* and a cyclic amino group represented by formula (II) below.

In formula (I), each $R^{11}$ is independently an alkyl group, cycloalkyl group, or aralkyl group having 1 to 12 carbon atoms, and * indicates a bonding position.

In formula (I), the alkyl group is preferably a methyl group, ethyl group, butyl group, octyl group, or isobutyl group. The cycloalkyl group is preferably a cyclohexyl group. The aralkyl group is preferably a 3-phenyl-1-propyl group.

[Formula 1]

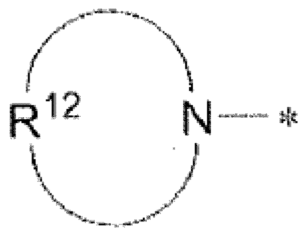 (II)

In formula (II), $R^{12}$ is an alkylene group, substituted alkylene group, oxyalkylene group, or N-alkylamino-alkylene group having 3 to 16 methylene groups, and * indicates a bonding position. Here, the substituted alkylene group includes an alkylene group having one to eight substituents, and examples of the substituent include a linear or branched alkyl group, cycloalkyl group, bicycloalkyl group, aryl group, or aralkyl group having 1 to 12 carbon atoms.

In formula (II), a trimethylene group, tetramethylene group, hexamethylene group, and dodecamethylene group are preferable as the alkylene group. The substituted alkylene group is preferably hexadecamethylene group. The oxyalkylene group is preferably an oxydiethylene group. The N-alkylamino-alkylene group is preferably N-alkylazadiethylene.

Examples of the cyclic amino group represented by formula (II) are not particularly limited and can be appropriately selected according to a purpose. Examples of the cyclic amino group represented by formula (II) include 2-(2-ethylhexyl)pyrrolidine, 3-(2-propyl)pyrrolidine, 3,5-bis(2-ethylhexyl)piperidine, 4-phenyl-piperidine, 7-decyl-1-azacyclotridecane, 3,3-dimethyl-1-azacyclotetradecane, 4-dodecyl-1-azacyclooctane, 4-(2-phenyl-butyl)-1-azacyclooctane, 3-ethyl-5-cyclohexyl-1-azacycloheptane, 4-hexyl-1-azacycloheptane, 9-isoamyl-1-azacycloheptadecane, 2-metyl-1-azacycloheptadece-9-ene, 3-isobutyl-1-azacyclododecane, 2-methyl-7-t-butyl-1-azacyclododecane, 5-nonyl-1-azacyclododecane, 8-(4'-methylphenyl)-5-pentyl-3-azabicyclo[5.4.0]undecane, 1-butyl-6-azabicyclo[3.2.1]octane, 8-ethyl-3-azabicyclo[3.2.1]octane, 1-propyl-3-azabicyclo[3.2.2]nonane, 3-(t-butyl)-7-azabicyclo[4.3.0]nonane, and 1,5,5-trimethyl-3-azabicyclo[4.4.0]decane.

- Modifying functional group including silicon atom -

The modifying functional group including a silicon atom is not particularly limited and can be appropriately selected according to a purpose. Examples of the modifying functional group including a silicon atom include a modifying functional group having a silicon-carbon bonding. When the modified conjugated diene-based polymer has a modifying functional group having a silicon-carbon bonding, affinity between the rubber component and a filler can be enhanced, and good wear resistance performance and high reinforcing performance can be imparted to rubber.

Examples of the modifying functional group having a silicon-carbon bonding include a coupling agent represented by formula (III): $(R^3)_aSi(R^4)_b$. In formula (III), each $R_3$ is independently a group selected from the group consisting of an alkyl group having 1 to 20 carbon atoms, a cycloalkyl group having 3 to 20 carbon atoms, an aryl group having 6 to 20 carbon atoms, and an aralkyl group having 7 to 20 carbon atoms; each $R_4$ is independently chlorine or bromine; a is 0 to 3; b is 1 to 4; and a + b = 4.

In formula (III), a methyl group, ethyl group, n-butyl group, n-octyl group, and 2-ethylhexyl group are preferable as the alkyl group, the cycloalkyl group is preferably a cyclohexyl group, the aryl group is preferably a phenyl group, and the aralkyl group is preferably a neophyl group.

Examples of the coupling agent using silicon are not particularly limited and can be appropriately selected according to a purpose, and examples thereof include a hydrocarbyloxy silane compound, $SiCl_4$ (silicon tetrachloride), $(R^3)SiCl_3$, $(R^3)_2SiCl_2$, and $(R^3)_3SiCl$. Among them, a hydrocarbyloxy silane compound is preferable from a viewpoint of high affinity against silica.

«Hydrocarbyloxy silane compound»

The hydrocarbyloxy silane compound is not particularly limited and can be appropriately selected according to a purpose, and examples thereof include a hydrocarbyloxy silane compound represented by formula (IV) below.

[Formula 2]

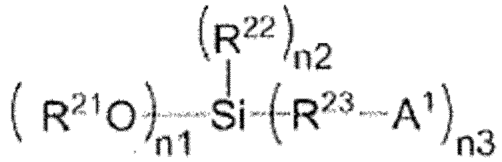

(IV)

In formula (IV), n1 + n2 + n3 = 4 (provided that n1 is an integer of 1 to 4, and n2 and n3 each are an integer of 0 to 3); $A^1$ is at least one functional group selected from a saturated cyclic tertiary amine compound residual group, an unsaturated cyclic tertiary amine compound residual group, a ketimine residual group, a nitrile group, a (thio)isocyanate group (referring to an isocyanate group or a thioisocyanate group, the same applying hereafter), a (thio)epoxy group, an isocyanuric acid trihydrocarbyl ester group, a carbonic acid dihydrocarbyl ester group, a nitrile group, a pyridine group, a (thio)ketone group, a (thio)aldehyde group, an amido group, a (thio)carboxylic acid ester group, a metal salt of a (thio)carboxylic acid ester, a carboxylic acid anhydride residual group, a carboxylic acid halogen compound residual group, and a primary or secondary amino group having a hydrolyzable group or a mercapto group having a hydrolyzable group, when n3 is two or more, a plurality of $A^1$ and $R^{23}$ may be the same or different, and $A^1$ may be a divalent group bonded to Si to form a cyclic structure; $R^{21}$ is a monovalent aliphatic or alicyclic hydrocarbon group having 1 to 20 carbon atoms or a monovalent aromatic hydrocarbon group having 6 to 18 carbon atoms, each of which may contain a nitrogen atom and/or a silicon atom, and when n1 is 2 or more, a plurality of $R^{21}$ may be the same or different or may together form a ring; $R^{22}$ is a monovalent aliphatic or alicyclic hydrocarbon group having 1 to 20 carbon atoms, a monovalent aromatic hydrocarbon group having 6 to 18 carbon atoms, or a halogen atom (fluorine, chlorine, bromine, or iodine), and when n2 is 2 or more, a plurality of $R^{22}$ may be the same or different; and $R^{23}$ is a divalent aliphatic or alicyclic hydrocarbon group having 1 to 20 carbon atoms or a divalent aromatic hydrocarbon group having 6 to 18 carbon atoms.

The hydrolyzable group of the primary or secondary amino group having a hydrolyzable group or a mercapto group having a hydrolyzable group is preferably a trimethylsilyl group or tert-butyldimethylsilyl group and especially preferably a trimethylsilyl group. Incidentally, the phrase "a monovalent aliphatic or alicyclic hydrocarbon group having 1 to 20 carbon atoms" herein means "a monovalent aliphatic hydrocarbon group having 1 to 20 carbon atoms or a monovalent alicyclic hydrocarbon group having 3 to 20 carbon atoms." The same applies to the case of a divalent hydrocarbon group.

The hydrocarbyloxy silane compound represented by formula (IV) is more preferably a hydrocarbyloxy silane compound represented by formula (V) below.

[Formula 3]

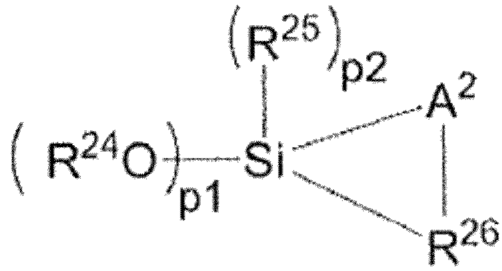

(V)

In the formula, p1 + p2 = 2 (provided that p1 is an integer of 1 to 2, and p2 is an integer of 0 to 1); and $A^2$ is NRa or sulfur, and Ra is a monovalent hydrocarbon group, a hydrolyzable group, or a nitrogen-containing organic group. $R^{24}$ is a monovalent aliphatic or alicyclic hydrocarbon group having 1 to 20 carbon atoms or a monovalent aromatic hydrocarbon group having 6 to 18 carbon atoms, each of which may contain a nitrogen atom and/or a silicon atom, and when p1 is 2, $OR^{24}$ may be the same or different or may together form a ring; $R^{25}$ is a monovalent aliphatic or alicyclic hydrocarbon group having 1 to 20 carbon atoms, a monovalent aromatic hydrocarbon group having 6 to 18 carbon atoms, or a halogen atom (fluorine, chlorine, bromine, or iodine); and $R^{26}$ is a divalent aliphatic or alicyclic hydrocarbon group having 1 to 20 carbon atoms or a divalent aromatic hydrocarbon group having 6 to 18 carbon atoms.

The hydrolyzable group of Ra is preferably a trimethylsilyl group or tert-butyldimethylsilyl group and especially preferably a trimethylsilyl group.

The hydrocarbyloxy silane compound represented by formula (IV) is more preferably a hydrocarbyloxy silane compound represented by formula (VI) or (VII) below.

[Formula 4]

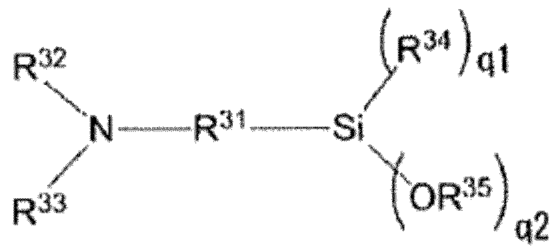

(VI)

In formula (VI), q1 + q2 = 3 (provided that q1 is an integer of 0 to 2, and q2 is an integer of 1 to 3); and $R^{31}$ is a divalent aliphatic or alicyclic hydrocarbon group having 1 to 20 carbon atoms or a divalent aromatic hydrocarbon group having 6 to 18 carbon atoms; $R^{32}$ and $R^{33}$ are each independently a hydrolyzable group, a monovalent aliphatic or alicyclic hydrocarbon group having 1 to 20 carbon atoms or a monovalent aromatic hydrocarbon group having 6 to 18 carbon atoms; $R^{34}$ is a monovalent aliphatic or alicyclic hydrocarbon group having 1 to 20 carbon atoms or a monovalent aromatic hydrocarbon group having 6 to 18 carbon atoms, and when q1 is 2, a plurality of $R^{34}$ may be the same or different; and $R^{35}$ is a monovalent aliphatic or alicyclic hydrocarbon group having 1 to 20 carbon atoms or a monovalent aromatic hydrocarbon group having 6 to 18 carbon atoms, and when q2 is 2 or more, a plurality of $R^{35}$ may be the same or different.

[Formula 5]

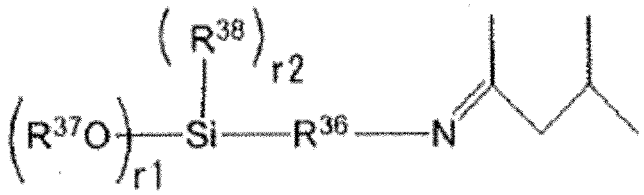

(VII)

In formula (VII), r1 + r2 = 3 (provided that r1 is an integer of 1 to 3, and r2 is an integer of 0 to 2); $R^{36}$ is a divalent aliphatic or alicyclic hydrocarbon group having 1 to 20 carbon atoms or a divalent aromatic hydrocarbon group having 6 to 18 carbon atoms; $R^{37}$ is a dimethylaminomethyl group, dimethylaminoethyl group, diethylaminomethyl group, diethylaminoethyl group, methylsilyl(methyl)aminomethyl group, methyl silyl (methyl) aminoethyl group, methylsilyl(ethyl)aminomethyl group, methylsilyl(ethyl)aminoethyl group, dimethylsilylaminomethyl group, dimethylsilylaminoethyl group, a monovalent aliphatic or alicyclic hydrocarbon group having 1 to 20 carbon atoms, or a monovalent aromatic hydrocarbon group having 6 to 18 carbon atoms, and when r1 is 2 or more, a plurality of $R^{37}$ may be the same or different; and $R^{38}$ is a monovalent aliphatic or alicyclic hydrocarbon group having 1 to 20 carbon atoms or a monovalent aromatic hydrocarbon group having 6 to 18 carbon atoms, and when r2 is 2, two $R^{38}$ may be the same or different.

In addition, the hydrocarbyloxy silane compound represented by formula (IV) is also preferably a compound represented by formula (VIII) or (IX) below, which has two or more nitrogen atoms.

[Formula 6]

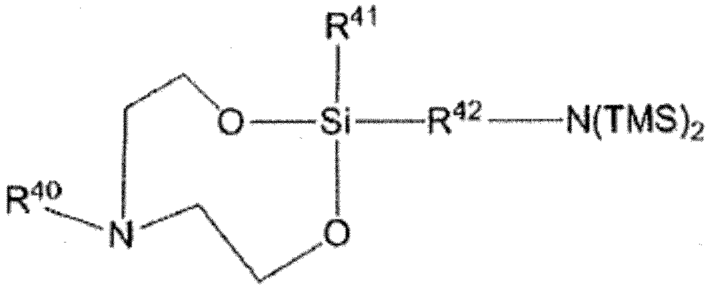

(VIII)

In formula (VIII), TMS is a trimethylsilyl group; $R^{40}$ is a trimethylsilyl group, a monovalent aliphatic or alicyclic hydrocarbon group having 1 to 20 carbon atoms, or a monovalent aromatic hydrocarbon group having 6 to 18 carbon atoms; $R^{41}$ is a hydrocarbyloxy group having 1 to 20 carbon atoms, a monovalent aliphatic or alicyclic hydrocarbon

group having 1 to 20 carbon atoms, or a monovalent aromatic hydrocarbon group having 6 to 18 carbon atoms; and $R^{42}$ is a divalent aliphatic or alicyclic hydrocarbon group having 1 to 20 carbon atoms or a divalent aromatic hydrocarbon group having 6 to 18 carbon atoms.

[Formula 7]

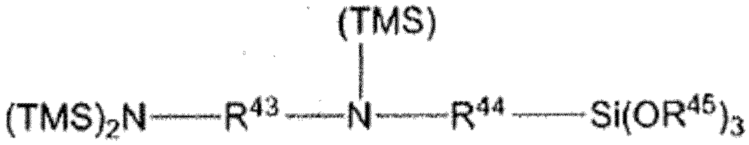

(IX)

In formula (IX), TMS is a trimethylsilyl group; $R^{43}$ and $R^{44}$ are each independently a divalent aliphatic or alicyclic hydrocarbon group having 1 to 20 carbon atoms or a divalent aromatic hydrocarbon group having 6 to 18 carbon atoms; and each $R^{45}$ is independently a monovalent aliphatic or alicyclic hydrocarbon group having 1 to 20 carbon atoms or a monovalent aromatic hydrocarbon group having 6 to 18 carbon atoms.

In addition, the hydrocarbyloxy silane compound represented by formula (IV) is also preferably a hydrocarbyloxy silane compound represented by formula (X) below.

[Formula 8]

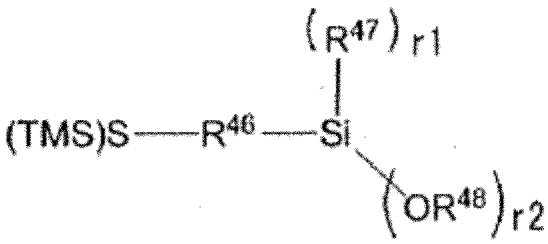

(X)

In formula (X), r1 + r2 = 3 (provided that r1 is an integer of 0 to 2, and r2 is an integer of 1 to 3); TMS is a trimethylsilyl group; $R^{46}$ is a divalent aliphatic or alicyclic hydrocarbon group having 1 to 20 carbon atoms or a divalent aromatic hydrocarbon group having 6 to 18 carbon atoms; and $R^{47}$ and $R^{48}$ are each independently a monovalent aliphatic or alicyclic hydrocarbon group having 1 to 20 carbon atoms or a monovalent aromatic hydrocarbon group having 6 to 18 carbon atoms.

The hydrocarbyloxy silane compound represented by formula (IV) is also preferably a compound represented by formula (XI) below.

[Formula 9]

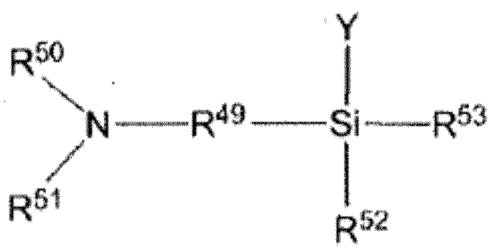

(XI)

In formula (XI), Y is a halogen atom; $R^{49}$ is a divalent aliphatic or alicyclic hydrocarbon group having 1 to 20 carbon atoms or a divalent aromatic hydrocarbon group having 6 to 18 carbon atoms; and $R^{50}$ and $R^{51}$ are each independently a hydrolyzable group, a monovalent aliphatic or alicyclic hydrocarbon group having 1 to 20 carbon atoms, or a monovalent aromatic hydrocarbon group having 6 to 18 carbon atoms, or $R^{50}$ and $R^{51}$ are bonded to each other to form a divalent organic group; $R^{52}$ and $R^{53}$ are each independently a halogen atom, a hydrocarbyloxy group, a monovalent aliphatic or alicyclic hydrocarbon group having 1 to 20 carbon atoms, or a monovalent aromatic hydrocarbon group having 6 to 18 carbon atoms.

$R^{50}$ and $R^{51}$ are each preferably a hydrolyzable group, and the hydrolyzable group is preferably a trimethylsilyl group or tert-butyldimethylsilyl group and especially preferably a trimethylsilyl group.

The hydrocarbyloxy silane compounds represented by formulae (IV) to (XI) are preferably used in the case where the modified conjugated diene-based polymer is manufactured by anionic polymerization. In addition, the hydrocarbyloxy silane compounds represented by formulae (IV) to (XI) are preferably alkoxysilane compounds.
The modifier suitable for the case where a conjugated diene-based polymer is modified through anionic polymerization is not particularly limited and can be appropriately selected according to a purpose, and examples thereof include 3,4-bis(trimethylsilyloxy)-1-vinylbenzene, 3,4-bis(trimethylsilyloxy)benzaldehyde, 3,4-bis(tert-butyldimethylsilyloxy)benzaldehyde, 2-cyanopyridine, 1,3-dimetnyl-2-imidazolidinone, and 1-methyl-2-pyrrolidone. One kind of them may be used alone, or two or more kinds thereof may be used in combination.
The hydrocarbyloxy silane compound is preferably an amido moiety of a lithium amide compound used as a polymerization initiator for anionic polymerization. The lithium amide compound is not particularly limited and can be appropriately selected according to a purpose, and examples thereof include lithium hexamethylene imide, lithium pyrrolidide, lithium piperidide, lithium heptamethylene imide, lithium dodecamethylene imide, lithium dimethylamide, lithium diethylamide, lithium dibutylamide, lithium dipropylamide, lithium di-heptyl amide, lithium dihexyl amide, lithium dioctyl amide, lithium di-2-ethylhexyl amide, lithium didecyl amide, lithium-N-methylpiperazide, lithium ethyl propyl amide, lithium ethyl butyl amide, lithium ethyl benzyl amide, and lithium methyl phenethyl amide. For example, the modifier to be the amido moiety of lithium hexamethylene imide is hexamethyleneimine, the modifier to be the amido moiety of lithium pyrrolidide is pyrrolidine, and the modifier to be the amido moiety of lithium piperidide is piperidine. One kind of them may be used alone, or two or more kinds thereof may be used in combination.

- Modifying functional group including oxygen atom -

The modifying functional group including an oxygen atom is not particularly limited and can be appropriately selected according to a purpose, and examples thereof include alkoxy groups such as a methoxy group, ethoxy group, n-propoxy group, isopropoxy group, n-butoxy group, sec-butoxy group, and t-butoxy group; alkoxyalkyl groups such as a methoxymethyl group, methoxyethyl group, ethoxymethyl group, and ethoxyethyl group; alkoxyaryl groups such as a methoxyphenyl group and ethoxyphenyl group; alkyleneoxide groups such as an epoxy group and tetrahydrofuranyl group; and trialkylsilyloxy groups such as a trimethylsilyloxy group, triethylsilyloxy group, and t-butyldimethylsilyloxy group. One kind of them may be used alone, or two or more kinds thereof may be used in combination.
The rubber of each of the central portion, shoulder portions, and edge portions preferably contains one or more kinds selected from the group consisting of a filler, oil, and resin in addition to the rubber component.

<Filler>

When the rubber of each of the central portion, shoulder portions, and edge portions contains a filler, a content thereof may be appropriately adjusted. The content is 1 to 200 parts by mass based on 100 parts by mass of the rubber component, for example. One kind of the filler may be used alone, or two or more kinds thereof may be used in combination.
Each of the rubber of the central portion, the rubber of the shoulder portions, and the rubber of the edge portions preferably contains the filler in an amount of 90 parts by mass or more and 120 parts by mass or less based on 100 parts by mass of the rubber component of each rubber.
The filler preferably includes at least silica.

<Silica>

A content of silica in the filler may be appropriately adjusted. One kind of silica may be used alone, or two or more kinds thereof may be used in combination.
In a case of the central portion, a content rate of silica based on the total amount of the filler is 20 to 95% by mass and preferably 60 to 90% by mass from a viewpoint of enhancing wear resistance performance, for example.
In a case of the shoulder portions, a content rate of silica based on the total amount of the filler is 20 to 95% by mass and preferably 60 to 90% by mass from a viewpoint of balance between wear resistance performance and wet gripping performance, for example.
In a case of the edge portions, a content rate of silica based on the total amount of the filler is 20 to 95% by mass and preferably 60 to 90% by mass from a viewpoint of balance between wear resistance performance and wet gripping performance, for example.
In the tire for a two-wheel vehicle according to the present invention, each of the rubber of the central portion, the rubber of the shoulder portions, and the rubber of the edge portions preferably contains 90 parts by mass or more of the filler based on 100 parts by mass of the rubber component of each rubber; the filler preferably includes at least silica; and the content rate of silica based on the total amount of the filler in the rubber of the central portion is preferably higher than the content rate of silica based on the total amount of the filler in the rubber of the shoulder portions.

Consequently, dry gripping performance and wet gripping performance of the tire for a two-wheel vehicle can be further enhanced, and an effect of further enhancing wet gripping performance is especially obtained.

Silica is not particularly limited and can be appropriately selected according to a purpose. Examples of silica include wet silica (hydrous silicate), dry silica (silicate anhydride), calcium silicate, and aluminum silicate. Among them, wet silica and dry silica are preferable from a viewpoint of enhancing wear resistance performance and wet gripping performance.

Any of the rubber selected from the central portion, the shoulder portions, and the edge portions preferably contains hydrous silicate. It is preferable that the rubber of the central portion contains hydrous silicate.

While a nitrogen adsorption specific surface area ($N_2SA$) of silica is not particularly limited and can be appropriately selected according to a purpose, it is preferably 80 to 300 $m^2/g$. $N_2SA$ of silica of 80 $m^2/g$ or more is preferable because reinforcing performance is excellent, and $N_2SA$ of silica of 300 $m^2/g$ or less is preferable because deterioration of operability can be suppressed. The nitrogen adsorption specific surface area ($N_2SA$) of silica refers to a specific surface area obtained by nitrogen absorption method described in JIS K 6430:2008.

A CTAB of hydrous silicate is 50 $m^2/g$ or more, 90 $m^2/g$ or more, or 180 $m^2/g$ or more and 250 $m^2/g$ or less or 220 $m^2/g$ or less, for example. When the CTAB is 50 $m^2/g$ or more, deterioration of wear resistance performance of a tire can be suppressed, and when the CTAB is 250 $m^2/g$ or less, hydrous silicate is easily dispersed in the rubber component, deterioration of processability of rubber can be suppressed, and therefore, deterioration of physical properties such as wear resistance performance can be suppressed.

In a preferred embodiment, a BET specific surface area of silica is 40 to 350 $m^2/g$, more preferably 100 to 300 $m^2/g$, more preferably 150 to 280 $m^2/g$, and still more preferably 190 to 250 $m^2/g$.

In the tire for a two-wheel vehicle according to the present invention, it is preferable that the rubber of the central portion contains hydrous silicate, and a cetyltrimethylammonium bromide (CTAB) adsorption specific surface area of the hydrous silicate is 180 $m^2/g$ or more.

Consequently, wear resistance performance of the central portion can be further enhanced while further enhancing gripping performance of the tire for a two-wheel vehicle.

<Carbon black>

Carbon black is not particularly limited and can be appropriately selected according to a purpose, and examples thereof include HAF, ISAF, and SAF in terms of classification by ASTM. One kind of them may be used alone, or two or more kinds thereof may be used in combination.

Among these kinds of carbon black, ISAF and SAF are preferable from a viewpoint of enhancing reinforcing performance.

An $N_2SA$ of carbon black is not particularly limited and can be appropriately selected according to a purpose. The $N_2SA$ is preferably 70 $m^2/g$ or more from a viewpoint of enhancing wear resistance performance. In addition, $N_2SA$ is preferably 180 $m^2/g$ or less. The nitrogen adsorption specific surface area ($N_2SA$) of carbon black refers to a nitrogen adsorption specific surface area described in JIS K 6217-2:2001.

While a content rate of carbon black based on the total amount of the filler in the rubber of each portion is not particularly limited and may be appropriately adjusted, the content rate exceeds 0% by mass and is 40% by mass or less, for example. The content rate is preferably 3 to 15% by mass in the rubber of the central portion, for example. The content rate is preferably 20 to 40% by mass in the rubber of each of the shoulder portions and the edge portions, for example. When the filler includes carbon black, strength of rubber is enhanced, and when the content rate thereof is 20% by mass or less, deterioration of wet gripping performance can be suppressed.

<Oil>

When the rubber of each of the central portion, the shoulder portions, and the edge portions contains oil, a content thereof may be appropriately adjusted. The content of the oil based on 100 parts by mass of the rubber component of each rubber is 5 to 150 parts by mass and preferably 40 to 60 parts by mass, for example. The oil may be extender oil of the rubber component or may be a compounding agent, and the content of the oil refers to an amount in which a content of the extender oil and a content of the compounding agent are combined.

Oil used for known rubber can be used as the oil, and examples thereof include aromatic oil, naphthene-based oil, paraffin-based oil, ester-based oil, conjugated diene rubber in a solution state, and hydrogenated conjugated diene rubber in a solution state.

<Resin>

When the rubber of each of the central portion, the shoulder portions, and the edge portions contains resin, a

content thereof may be appropriately adjusted. For example, the content of the resin based on 100 parts by mass of the rubber component of each rubber is 5 to 150 parts by mass and is preferably 15 to 55 parts by mass from a viewpoint of enhancing wet gripping performance.

The resin is not particularly limited and can be appropriately selected according to a purpose, and examples thereof include natural resin and synthetic resin. One kind of them may be used alone, or two or more kinds thereof may be used in combination.

The synthetic resin is not particularly limited and can be appropriately selected according to a purpose, and examples thereof include petroleum resin, phenol-based resin, coal-based resin, and xylene-based resin. Among them, petroleum resin is preferable because wear resistance performance and gripping performance are easily enhanced thereby.

Petroleum resin

The petroleum resin can be obtained by polymerizing a fraction containing an unsaturated hydrocarbon such as olefin and diolefin using a catalyst for Friedel-Crafts reaction, said fraction being obtained from thermal decomposition of naphtha during a petroleum refining process together with petrochemical basic products such as ethylene, propylene, and butylene, for example.

The petroleum resin is not particularly limited and can be appropriately selected according to a purpose, and examples thereof include aliphatic petroleum resin obtained by homopolymerizing and/or copolymerizing a C5 fraction obtained by thermal decomposition of naphtha; aromatic petroleum resin obtained by homopolymerizing and/or copolymerizing a C9 fraction obtained by thermal decomposition of naphtha; copolymer-based petroleum resin obtained by copolymerizing a C5 fraction and a C9 fraction; hydrogenated petroleum resin; alicyclic compound-based petroleum resin such as dicyclopentadiene-based petroleum resin; and styrene-based resin such as styrene, substituted styrene, and a copolymer of styrene and another monomer.

Among them, copolymer-based petroleum resin is preferable, and copolymer-based petroleum resin obtained by copolymerizing a C5 fraction and a C9 fraction, which are obtained by thermal decomposition of naphtha, is especially preferable because wear resistance performance and gripping performance are easily enhanced thereby.

The C5 fraction is not particularly limited and can be appropriately selected according to a purpose, and examples thereof include olefin-based hydrocarbons such as 1-pentene, 2-pentene, 2-methyl-1-butene, 2-methyl-2-butene, and 3-methyl-1-butene and diolefin-based hydrocarbons such as 2-methyl-1,3-butadiene, 1,2-pentadiene, 1,3-pentadiene, and 3-methyl-1,2-butadiene.

The C9 fraction is not particularly limited and can be appropriately selected according to a purpose, and examples thereof include styrene isomers such as α-methylstyrene, β-methylstyrene, and γ-methylstyrene; and indene analogs such as indene and 1-benzofuran (coumarone).

The phenol-based resin is not particularly limited and can be appropriately selected according to a purpose, and examples thereof include alkylphenol-formaldehyde-based resin and a rosin-modified product thereof, alkylphenol-acethylene-based resin, modified alkylphenol resin, and terpene phenolic resin.

The coal-based resin is not particularly limited and can be appropriately selected according to a purpose, and examples thereof include coumarone indene resin.

The xylene-based resin is not particularly limited and can be appropriately selected according to a purpose, and examples thereof include xylene formaldehyde resin.

The natural resin is not particularly limited and can be appropriately selected according to a purpose, and examples thereof include rosin-based resin and terpene-based resin.

The rosin-based resin is not particularly limited and can be appropriately selected according to a purpose, and examples thereof include gum rosin, tall oil rosin, wood rosin, hydrogenated rosin, disproportionated rosin, polymerized rosin, and modified rosin of glycerin, pentaerythritol, or the like.

The terpene-based resin is not particularly limited and can be appropriately selected according to a purpose, and examples thereof include terpene resin such as α-pinene-based resin, β-pinene-based resin, and dipentene-based resin; aromatic-modified terpene resin; terpenephenol resin; and hydrogenated terpene resin.

Among these kinds of resin, polymerized rosin, terpenephenol resin, and hydrogenated terpene resin are preferable because wear resistance performance and gripping performance can be balanced thereby.

While a softening point of the resin is not particularly limited and can be appropriately selected according to a purpose, it is preferably 45 to 120°C. When low softening point resin having a softening point of 145°C or less is contained, rubber is softened at a relatively low temperature to become adhesive, and gripping performance of the rubber can be enhanced.

It is preferable that each of the rubber of the central portion, the rubber of the shoulder portions, and the rubber of the edge portions in the tire for a two-wheel vehicle according to the present invention contains the oil and the resin in a total amount of 50 to 150 parts by mass based on 100 parts by mass of the rubber component of each rubber and

that the amount by parts of the resin based on 100 parts by mass of the rubber component in the rubber of the central portion is smaller than the amount by parts of the resin based on 100 parts by mass of the rubber component in the rubber of the shoulder portions.

Consequently, gripping performance of the tire for a two-wheel vehicle can be further enhanced.

<Other components>

Each rubber of the tread portion may contain a vulcanizing agent; a vulcanization accelerator such as zinc oxide; a vulcanization retardant; a plasticizer such as wax; a fatty acid such as stearic acid; an age resistor; and the like in addition to the above-described components within a range not inconsistent with the present invention.

<Vulcanizing agent>

The vulcanizing agent is not particularly limited, sulfur is usually used as the vulcanizing agent, and examples thereof can include powdered sulfur, precipitated sulfur, colloidal sulfur, surface-treated sulfur, and insoluble sulfur.

While a content of the vulcanizing agent may be appropriately adjusted, it may be 0.1 to 10 parts by mass and is preferably 0.5 to 7.0 parts by mass and more preferably 1.0 to 5.0 parts by mass based on 100 parts by mass of the rubber component from a viewpoint of vulcanizability and aging resistance of vulcanized rubber, for example.

<Age resistor>

Examples of the age resistor can include 3C (N-isopropyl-N'-phenyl-p-phenylenediamine), 6C [N-(1,3-dimethylbutyl)-N'-phenyl-p-phenylenediamine], AW (6-ethoxy-2,2,4-trimethyl-1,2-dihydroquinoline), and a high-temperature condensation product of diphenylamine and acetone.

The rubber of the tread portion can be manufactured by blending components such as the rubber component described above and kneading the blended components using a known kneader such as Banbury mixer, a roller, and an internal mixer followed by vulcanization. The kneading of the components may be conducted in a single step or may be conducted in separated two or more steps. For example, when the components are kneaded in two steps, the highest temperature in the first step of kneading is preferably 140 to 160°C, and the highest temperature in the second step of kneading is preferably 90 to 120°C. Vulcanization conditions are not particularly limited, and vulcanization conditions for a known tire for a two-wheel vehicle can be employed.

Peripheral lengths (curved lengths) of the central portion 15, shoulder portions 18, and edge portions 17 on the surface of the tread portion in the width direction may be appropriately adjusted. In FIG. 1, a curved length Lc of the central portion on the surface of the tread portion in the width direction is a curved length from point T1 to point T2. In FIG. 1, a curved length Ls of the shoulder portions 18 on the surface of the tread portion in the width direction is the sum of the curved length from point T3 to point T1 and the curved length from point T4 to point T2. In FIG. 1, a curved length $L_E$ of the edge portions 17 on the surface of the tread portion in the width direction is the sum of the curved length from a tread edge 16 at the left side to point T3 and the curved length from a tread edge 16 at the right side to point T4. Herein, lengths of concavities and convexities of tread grooves are not included in the peripheral lengths (curved lengths).

The curved length Lc of the central portion 15 is preferably 10 to 50% and more preferably 20 to 40% of the whole curved length L (that is, the sum of the curved length Lc of the central portion 15, the curved length Ls of the shoulder portions 18, and the curved length $L_E$ of the edge portions 17) on the surface of the tread portion in the width direction.

The curved length Ls of the shoulder portions 18 is preferably 20 to 60% and more preferably 30 to 50% of the whole curved length L on the surface of the tread portion in the width direction.

The curved length $L_E$ of the edge portions 17 is preferably 10 to 50% and more preferably 20 to 40% of the whole curved length L on the surface of the tread portion in the width direction.

The tread portion 13 may be divided into five portions in the surface of the tread portion by the central portion 15, the shoulder portions 18, and the edge portions 17, and the portion adjacent to the carcass layer 20 of the tread portion 13 may be a single portion (identical to any of the central portion 15, shoulder portions 18, and edge portions 17), may be divided into three portions (the central portion 15 and the shoulder portions 18; the central portion 15 and the edge portions 17; or the shoulder portion 18 and the edge portions 17), or may be divided into five portions.

FIG. 2 is a schematic diagram illustrating a cross-section in a width direction of a tire for a two-wheel vehicle according to another embodiment of the present invention. The same signs as FIG. 1 respectively refer to the same objects. In FIG. 2, the tread portion 13 is divided into five portions in a surface of the tread portion 13 by a central portion 15 including a tire equatorial plane 14, a pair of edge portions 17 including respective tread edges 16, and a pair of shoulder portions 18 lying between the central portion 15 and the respective edge portions 17 in a tire width direction. In the example of FIG. 2, rubber of the central portion 15 functions as base rubber 21 at the side of a carcass layer 20

of the shoulder portions 18 and the edge portions 17. Then, in the shoulder portions 18, rubber of the shoulder portions 18 is provided on the base rubber 21, and in the edge portions 17, rubber of the edge portions 17 is provided on the base rubber 21.

The tire for a two-wheel vehicle according to the present invention may be any tire as long as it is a tire for a two-wheel vehicle and may be a tire for a motorcycle. The two-wheel vehicle is not particularly limited and can be appropriately selected according to a purpose, and examples thereof include a racing two-wheel vehicle, a two-wheel vehicle for running on an ordinary road, an on-road two-wheel vehicle, and an off-road two-wheel vehicle. Among them, a two-wheel vehicle for running on an ordinary road and an on-road two-wheel vehicle are preferable, and a two-wheel vehicle for running on an ordinary road is more preferable as a two-wheel vehicle in which the effect of the present invention is especially likely to be exerted.

The tire for a two-wheel vehicle according to the present invention may be any tire as long as it is a tire for a two-wheel vehicle, may be used for any one or more of a front tire and a rear tire, and may be used for tires of both wheels.

## EXAMPLES

Hereinafter, the present invention will be described in more detail by giving examples.

Specifics of materials used in examples are as follows.

Modified butadiene rubber (described as "Modified BR" in Table 1 to Table 3): synthesized by the method described later

Styrene-butadiene rubber (described as "SBR1" in Table 1 to Table 3): manufactured by JSR Corporation, styrene content of 39.5%, vinyl content of 38.5%, containing 27.3 parts by mass of oil based on 100 parts by mass of styrene-butadiene rubber, Mw = 1,050,000

Styrene-butadiene rubber (described as "SBR2" in Table 1 to Table 3): manufactured by Asahi Kasei Corp., Tufdene® (Tufdene is a registered trademark in Japan, other countries, or both) E581, Mw = 1,200,000

Carbon black: manufactured by Tokai Carbon Co., Ltd., SAF SEAST9 ($N_2SA$: 142 $m^2/g$)

Silica (referred to as "Silica 1" in Table 1 to Table 3): manufactured by Tosoh Silica Corporation, Nipsil® (Nipsil is a registered trademark in Japan, other countries, or both) AQ (CTAB = 165 $m^2/g$), BET 205 $m^2/g$

Silica (referred to as "Silica 2" in Table 1 to Table 3): synthesized by the same method as the synthesis method of silica (2) described in paragraph [0138] of International Publication No. WO2018/186367. CTAB = 191 $m^2/g$, BET specific surface area = 245 $m^2/g$

Silane coupling agent: manufactured by Shin-Etsu Chemical Co., Ltd., trade mark of ABC-856

Zinc oxide: manufactured by Hakusui Tech Co., Ltd., zinc oxide No. 2

Oil: oil in which extender oil of a rubber component and an oil component as a compounding agent are mixed, manufactured by SANKYO YUKA KOGYO K.K., including A/O MIX

Incidentally, each of the oil contents provided in the "oil" column in Table 1 to Table 3 is the sum of an oil content of "A/O MIX" and an oil amount in SBR1 or SBR2.

Resin: manufactured by Harima Chemicals Group, Inc., HARITACK AQ-100B (rosin-modified synthetic resin)

Age resistor (referred to as "6C" in Table 1): manufactured by Sumitomo Chemical Co., Ltd., ANTIGEN® (ANTIGEN is a registered trademark in Japan, other countries, or both) 6C

Vulcanization accelerator (referred to as "DPG" in Table 1): manufactured by Sumitomo Chemical Co., Ltd., SOXINOL® (SOXINOL is a registered trademark in Japan, other countries, or both) D

Vulcanization accelerator (referred to as "CZ" in Table 1): manufactured by Ouchi Shinko Chemical Industrial Co., Ltd., NOCCELER® (NOCCELER is a registered trademark in Japan, other countries, or both) CZ-G

Methyl aluminoxane MAO: manufactured by Tosoh Akzo Corporation, PMAO

Diisobutyl aluminum hydride: manufactured by Kanto Chemical Co., Inc.

Chlorinated diethyl aluminum: manufactured by Kanto Chemical Co., Inc.

Specifics of a device used in examples are as follows.

Dynamic spectrometer: Ueshima Seisakusho Co., Ltd.

<Synthesis of modified butadiene rubber (modified conjugated diene-based polymer)>

(1) Preparation of catalyst

To a glass bottle which had been dried and subjected to nitrogen substitution and which had a volume of about 100 mL and had a rubber plug, 7.11 g of a cyclohexane solution of butadiene (15.2% by mass), 0.59 mL of a cyclohexane solution of neodymium neodecanoate (0.56 M), 10.32 mL of a toluene solution of methyl aluminoxane MAO (3.23 M as

aluminum concentration), 7.77 mL of a hexane solution of diisobutyl aluminum hydride (0.90 M) were introduced in this order; after aging the resultant mixture for two minutes at room temperature, 1.45 mL of a hexane solution of chlorinated diethyl aluminum (0.95 M) was added thereto; and the resultant mixture was aged for 15 minutes at room temperature while being occasionally stirred. The concentration of neodymium in the catalyst solution thus obtained was 0.011 M (mole/liter).

(2) Manufacturing of polymer intermediate

To a glass bottle which had been dried and subjected to nitrogen substitution and which had a volume of about 900 mL and had a rubber plug, a dried and purified cyclohexane solution of 1,3-butadiene and dried cyclohexane were separately introduced to achieve a state where 400 g of a 12.5 mass% cyclohexane solution of 1,3-butadiene was charged. Thereafter, 2.28 mL of the catalyst solution prepared in (1) (0.025 mmol in terms of neodymium) was introduced to the resultant mixture followed by polymerization in a warm water bath at 50°C for 1.0 hours.

(3) First modification treatment

First modification was conducted by putting a hexane solution of 3-glycidoxypropyltrimethoxysilane (1.0 M) in an amount of 23.5 mole equivalents (compared to neodymium) in terms of 3-glycidoxypropyltrimethoxysilane as a first modifier and carrying out treatment at 50°C for 60 minutes.

(4) Second modification and subsequent treatment

Subsequently, 1.76 mL (corresponding to 70.5 eq/Nd) of a cyclohexane solution of tin bis(2-ethylhexanoate) (BEHAS) (1.01 M) as a condensation accelerator and 32 μL (corresponding to 70.5 eq/Nd) of deionized water were charged, and treatment was carried out in a warm water bath at 50°C for 1.0 hours. Thereafter, 2 mL of a 5 mass% isopropanol solution of an age resistor, 2,2-methylene bis(4-ethyl-6-t-butylphenol) (NS-5), was added to the polymerization system to terminate the reaction, and reprecipitation was further conducted in isopropanol containing a trace amount of NS-5 followed by drum drying to obtain modified butadiene rubber (modified conjugated diene-based polymer). The Mooney viscosity $ML_{1+4}$ (100°C) of the obtained modified butadiene rubber measured by using RLM-01 type tester manufactured by Toyo Seiki Co., Ltd. at 100°C was 93.

<Examples 1 to 3>

A rubber composition for each of a central portion, shoulder portions, and edge portions was prepared according to the amounts compounded (parts by mass) provided in Table 1 to Table 3. A test product of a tier for a two-wheel vehicle (size: 180/55ZR17) having a tread portion divided into five portions as illustrated in FIG. 1 was manufactured by an ordinary method using each of the prepared rubber compositions for the tread portion. The proportions of the central portion, shoulder portions, and edge portions in the tread portion were set as Lc = 30%, Ls = 40%, and $L_E$ = 30%, respectively. Dry gripping performance and wet gripping performance of each of the resultant tire were evaluated according to the method described later.

<Comparable Examples 1 to 6>

A rubber composition for each of a central portion, shoulder portions, and edge portions is prepared according to the amounts compounded (parts by mass) provided in Table 1 and Table 2. A test product of a tier for a two-wheel vehicle (size: 180/55ZR17) having a tread portion divided into five portions as illustrated in FIG. 1 is manufactured by an ordinary method using each of the prepared rubber compositions for the tread portion. The proportions of the central portion, shoulder portions, and edge portions in the tread portion are set as Lc = 30%, Ls = 40%, and $L_E$ = 30%, respectively. Dry gripping performance and wet gripping performance of each of the resultant tire are evaluated according to the method described later.

[Table 1]

| Components of rubber composition for tread portion | | |
|---|---|---|
| Kind | | Amount compounded (parts by mass) |
| Rubber component | Modified BR | Amounts provided in Table 2 or Table 3 |
| | SBR 1 | |
| | SBR 2 | |
| Filler | Silica 1 | |
| | Silica 2 | |
| | Carbon black | |
| Oil | | |
| Resin | | |
| Vulcanizing agent (sulfur) | | 1.8 |
| Silane coupling agent | | An amount of 10% by mass based on total amount of silica compounded |
| Zinc oxide | | 2.0 |
| Stearic acid | | 1.5 |
| Age resistor 6C | | 2.0 |
| Vulcanization accelerator DPG | | 3.0 |
| Vulcanization accelerator CZ | | 2.0 |

<Measurement of peak temperature of loss tangent tan δ of tread rubber>

With respect to each of Examples 1 to 3, a peak temperature of a loss tangent tan δ of the rubber of each of the central portion, shoulder portions, and edge portions was measured. Specifically, measurements were conducted by using a dynamic spectrometer under the temperature distribution conditions of from -30°C to 60°C, an initial strain of 10%, a dynamic strain of 1%, a frequency of 52 Hz, and a temperature raising rate of 2 °C/min. Results of the rubber of each portion are provided in Table 3. With respect to each of Comparative Examples 1 to 6, a peak temperature of a loss tangent tan δ of the rubber of each of the central portion, shoulder portions, and edge portions is measured. Specifically, measurements are conducted by using a dynamic spectrometer under the temperature distribution conditions of from -30°C to 60°C, an initial strain of 10%, a dynamic strain of 1%, a frequency of 52 Hz, and a temperature raising rate of 2 °C/min. Prediction results of the rubber of each portion are provided in Table 2.

<Performance evaluation>

1. Dry gripping performance test

With respect to each of Examples 1 to 3, a test rider performed various kinds of traveling on a dry road course, and subjective evaluation on dry gripping performance of the traveling tire was conducted. Evaluation results are provided in Table 3. With respect to each of Comparative Examples 1 to 6, a test rider performs various kinds of traveling on a dry road course, and subjective evaluation on dry gripping performance of the traveling tire is conducted. Prediction results are provided in Table 2. The larger the value is, the more excellent dry gripping performance the tire has.

2. Wet gripping performance test

With respect to each of Examples 1 to 3, a test rider performed various kinds of traveling on a wet road course, and subjective evaluation on wet gripping performance of the traveling tire was conducted. Evaluation results are provided in Table 3. With respect to each of Comparative Examples 1 to 6, a test rider performs various kinds of traveling on a wet road course, and subjective evaluation on wet gripping performance of the traveling tire is conducted. Prediction results are provided in Table 2. The larger the value is, the more excellent wet gripping performance the tire has.

3. Wear resistance performance test

With respect to Examples 1 to 3, wear amounts of the tires after the completion of the traveling tests by the test rider were compared through depth gauge measurements. Evaluation results are provided in Table 3. With respect to Comparative Examples 1 to 6, wear amounts of the tires after the completion of the traveling tests by the test rider are compared through depth gauge measurements. Prediction results are provided in Table 2. The results are represented by indexes based on the result of the tire of Comparative Example 1 as 100. The larger the value is, the more excellent the wear resistance performance is.

[Table 2]

| | | Comparative Example 1 | | | Comparative Example 2 | | | Comparative Example 3 | | | Comparative Example 4 | | | Comparative Example 5 | | | Comparative Example 6 | | |
|---|---|---|---|---|---|---|---|---|---|---|---|---|---|---|---|---|---|---|---|
| | | Central portion | Shoulder portion | Edge portion | Central portion | Shoulder portion | Edge portion | Central portion | Shoulder portion | Edge portion | Central portion | Shoulder portion | Edge portion | Central portion | Shoulder portion | Edge portion | Central portion | Shoulder portion | Edge portion |
| Rubber component | Modified BR | 15 | 15 | 15 | 15 | 15 | 15 | 15 | 15 | 15 | 15 | 15 | 15 | 15 | 15 | 15 | 15 | 15 | 15 |
| | SBR 1 | 85 | 85 | - | 85 | 85 | - | 85 | 85 | - | 85 | 85 | - | 85 | 85 | - | 85 | 85 | - |
| | SBR 2 | - | - | 85 | - | - | 85 | - | - | 85 | - | - | 85 | - | - | 85 | - | - | 85 |
| Filler | Carbon black | 10 | 40 | 40 | 10 | 40 | 40 | 10 | 40 | 40 | 10 | 40 | 40 | 10 | 40 | 40 | 10 | 40 | 40 |
| | Silica 1 | 85 | 65 | 65 | 65 | 65 | 65 | 65 | 65 | 65 | 85 | 65 | 65 | 85 | 65 | 65 | 85 | 65 | 65 |
| | Silica 2 | - | - | - | - | - | - | - | - | - | - | - | - | - | - | - | - | - | - |
| | Total | 95 | 105 | 105 | 75 | 105 | 105 | 75 | 105 | 105 | 95 | 105 | 105 | 95 | 105 | 105 | 95 | 105 | 105 |
| Softener | Oil | 30 | 40 | 50 | 20 | 40 | 50 | 30 | 40 | 50 | 0 | 10 | 20 | 40 | 40 | 50 | 30 | 40 | 55 |
| | Resin | 25 | 45 | 55 | 25 | 45 | 55 | 25 | 45 | 55 | 55 | 75 | 85 | 15 | 45 | 55 | 25 | 45 | 45 |
| Property | tanδ peak temperature (°C) | - 1.0 | $T_{p-S}$ = 1.0 | $T_{p-E}$ - 1.0 | $T_{p-C}$ = 1.5 | $T_{p-S}$ = 1.0 | $T_{p-E}$ - 1.0 | $T_{p-C}$ = 1.0 | $T_{p-S}$ = 1.0 | $T_{p-E}$ - 1.0 | $T_{p-C}$ = 100 | $T_{p-S}$ = 100 | $T_{p-E}$ - 10.0 | $T_{p-C}$ = -6.0 | $T_{p-S}$ = 1.0 | $T_{p-E}$ - 1.0 | = 1.0 | $T_{p-S}$ = 1.0 | $T_{p-E}$ = -2.0 |
| Evaluation | Dry gripping performance | 6.0 | | | 5.0 | | | 5.5 | | | 4.5 | | | 60 | | | 6.5 | | |
| | Wet gripping performance | 6.0 | | | 4.5 | | | 5.0 | | | 45 | | | 6.0 | | | 60 | | |
| | Wear resistance performance | 100 | | | 113 | | | 106 | | | 63 | | | 113 | | | 100 | | |

[Table 3]

| | | Example 1 | | | Example 2 | | | Example 3 | | |
|---|---|---|---|---|---|---|---|---|---|---|
| | | Central portion | Shoulder portion | Edge portion | Central portion | Shoulder portion | Edge portion | Central portion | Shoulder portion | Edge portion |
| Rubber component | Modified BR | 16 | 15 | 15 | 16 | 15 | 15 | 16 | 15 | 15 |
| | SBR1 | 84 | 85 | - | 84 | 85 | - | 84 | 85 | - |
| | SBR2 | - | - | 85 | - | - | 85 | - | - | 85 |
| Filler | Carbon black | 10 | 17 | 41 | 10 | 13 | 41 | 15 | 17 | 41 |
| | Silica 1 | 85 | 83 | 64 | 85 | 97 | 64 | - | 83 | 64 |
| | Silica 2 | - | - | - | - | - | - | 85 | - | - |
| | Total | 95 | 100 | 105 | 95 | 110 | 105 | 100 | 100 | 105 |
| Softener | Oil | 39 | 41 | 53 | 39 | 41 | 53 | 35 | 41 | 53 |
| | Resin | 17 | 47 | 46 | 17 | 55 | 46 | 21 | 47 | 46 |
| Property | tanδ peak temperature (°C) | $T_{p-C}$ = -6.0 | $T_{p-S}$ = 1.0 | $T_{p-E}$ = -2.0 | $T_{p-C}$ = -6.0 | $T_{p-S}$ = 2.0 | $T_{p-E}$ = -2.0 | $T_{p-C}$ = -6.0 | $T_{p-S}$ = 1.0 | $T_{p-E}$ = -2.0 |
| Evaluation | Dry gripping performance | 7.5 | | | 8.0 | | | 8.0 | | |
| | Wet gripping performance | 7.5 | | | 8.0 | | | 8.0 | | |
| | Wear resistance performance | 138 | | | 125 | | | 150 | | |

When $T_{p-C}$, $T_{p-S}$, and $T_{p-E}$, which are respectively peak temperatures of loss tangents tan $\delta$ of rubber of a central portion, rubber of shoulder portions, and rubber of edge portions, satisfy the formula: $T_{p-S} > T_{p-E} > T_{p-C} \cdots (1)$, a tire for a two-wheel vehicle in which wear resistance performance, dry gripping performance, and wet gripping performance are highly balanced can be provided thereby.

INDUSTRIAL APPLICABILITY

According to the present invention, a tire for a two-wheel vehicle in which wear resistance performance (especially wear resistance performance of a central portion), dry gripping performance, and wet gripping performance are highly balanced can be provided.

REFERENCE SIGNS LIST

10 tire for two-wheel vehicle
11 bead portion
12 sidewall portion
13 tread portion
14 tire equatorial plane
15 central portion
16 tread edge
17 edge portion
18 shoulder portion
19 bead core
20 carcass layer
21 base rubber

## Claims

**1.** A tire (10) for a two-wheel vehicle, comprising a pair of bead portions (11), a pair of sidewall portions (12), and a tread portion (13) continuous with the both sidewall portions (12), with

the tread portion (13) being divided into five portions in a surface of the tread portion (13) by a central portion (15) including a tire equatorial plane (13), a pair of edge portions (17) including respective tread edges (16), and a pair of shoulder portions (18) lying between the central portion (15) and the respective edge portions (17) in a tire width direction, wherein
each of rubber of the central portion (15), rubber of the shoulder portions (18), and rubber of the edge portions (17) contains a rubber component, **characterized in that**
when a peak temperature of a loss tangent tan $\delta$ of the rubber of the central portion (15) is represented by $T_{p-C}$, a peak temperature of a loss tangent tan $\delta$ of the rubber of the shoulder portions (18) is represented by $T_{p-S}$, and a peak temperature of a loss tangent tan $\delta$ of the rubber of the edge portions (17) is represented by $T_{p-E}$, $T_{p-C}$, $T_{p-S}$, and $T_{p-E}$ satisfy formula (1) below:

$$T_{p-S} > T_{p-E} > T_{p-C} \cdots (1),$$

when measurement of the peak temperature of a loss tangent tan $\delta$ of the rubbers is conducted by using a dynamic spectrometer under the temperature distribution conditions of from -30°C to 60°C, an initial strain of 10%, a dynamic strain of 1%, a frequency of 52 Hz, and a temperature raising rate of 2 °C/min.

**2.** The tire (10) for a two-wheel vehicle according to claim 1, wherein each of the $T_{p-C}$, $T_{p-S}$, and $T_{p-E}$ is within a range of -10 to 5°C.

**3.** The tire (10) for a two-wheel vehicle according to claim 1 or 2, wherein each of the rubber of the central portion (15), the rubber of the shoulder portions (18), and the rubber of the edge portions (17) contains styrene-butadiene rubber as the rubber component.

4. The tire (10) for a two-wheel vehicle according to claim 3, wherein a weight-average molecular weight of styrene-butadiene rubber of the rubber of the edge portions (17) is larger than a weight-average molecular weight of styrene-butadiene rubber of the rubber of the central portion (15) or a weight-average molecular weight of styrene-butadiene rubber of the rubber of the shoulder portions (18).

5. The tire (10) for a two-wheel vehicle according to any one of claims 1 to 4, wherein each of the rubber of the central portion (15), the rubber of the shoulder portions (18), and the rubber of the edge portions (17) contains 90 parts by mass or more of a filler based on 100 parts by mass of the rubber component of each rubber,

   the filler includes at least silica, and
   a content rate of silica based on a total amount of the filler in the rubber of the central portion (15) is higher than a content rate of silica based on the total amount of the filler in the rubber of the shoulder portion (18).

6. The tire (10) for a two-wheel vehicle according to any one of claims 1 to 5, wherein each of the rubber of the central portion (15), the rubber of the shoulder portions (18), and the rubber of the edge portions (17) contains the oil and resin in a total amount of 50 to 150 parts by mass based on 100 parts by mass of the rubber component of each rubber, and
   an amount by parts of the resin based on 100 parts by mass of the rubber component in the rubber of the central portion (15) is smaller than an amount by parts of the resin based on 100 parts by mass of the rubber component in the rubber of the shoulder portions (18).

7. The tire (10) for a two-wheel vehicle according to any one of claims 1 to 6, wherein the rubber of the central portion (15) contains hydrous silicate, and a cetyltrimethylammonium bromide (CTAB) adsorption specific surface area of the hydrous silicate is 180 $m^2/g$ or more.

8. The tire (10) for a two-wheel vehicle according to any one of claims 1 to 7, wherein each of the rubber of the central portion (15), the rubber of the shoulder portions (18), and the rubber of the edge portions (17) contains a modified conjugated diene-based polymer as the rubber component.

**Patentansprüche**

1. Reifen (10) für ein zweirädriges Fahrzeug, der ein Paar von Wulstabschnitten (11), ein Paar von Seitenwandabschnitten (12) und einen Laufflächenabschnitt (13), zusammenhängend mit den beiden Seitenwandabschnitten (12), umfasst, wobei

   der Laufflächenabschnitt (13) in fünf Abschnitte in einer Oberfläche des Laufflächenabschnitts (13) geteilt ist durch einen Mittelabschnitt (15), der eine Reifenäquatorialebene (13) einschließt, ein Paar von Kantenabschnitten (17), die jeweilige Laufflächenkanten (16) einschließen, und ein Paar von Schulterabschnitten (18), die in einer Reifenbreitenrichtung zwischen dem Mittelabschnitt (15) und den jeweiligen Kantenabschnitten (17) liegen, wobei
   jeder von einem Kautschuk des Mittelabschnitts (15), einem Kautschuk der Schulterabschnitte (18) und einem Kautschuk der Kantenabschnitte (17) eine Kautschukkomponente enthält, **dadurch gekennzeichnet, dass**, wenn eine Spitzentemperatur eines Verlustfaktors tan $\delta$ des Kautschuks des Mittelabschnitts (15) durch $T_{p\text{-}C}$ dargestellt wird, eine Spitzentemperatur eines Verlustfaktors tan $\delta$ des Kautschuks der Schulterabschnitte (18) durch $T_{p\text{-}S}$ dargestellt wird, und eine Spitzentemperatur eines Verlustfaktors tan $\delta$ des Kautschuks der Kantenabschnitte (17) durch $T_{p\text{-}E}$ dargestellt wird, $T_{p\text{-}C}$, $T_{p\text{-}S}$ und $T_{p\text{-}E}$ die Formel (1) unten erfüllen:

$$T_{p\text{-}S} > T_{p\text{-}E} > T_{p\text{-}C} \ldots (1),$$

   wenn eine Messung der Spitzentemperatur eines Verlustfaktors tan $\delta$ der Kautschuke durchgeführt wird durch Verwendung eines dynamischen Spektrometers unter den Temperaturverteilungsbedingungen von -30 °C bis 60 °C, einer anfänglichen Dehnung von 10 %, einer dynamischen Dehnung von 1 %, einer Frequenz von 52 Hz und einer Temperaturerhöhungsgeschwindigkeit von 2 °C/min.

2. Reifen (10) für ein zweirädriges Fahrzeug nach Anspruch 1, wobei jede von $T_{p\text{-}C}$, $T_{p\text{-}S}$ und $T_{p\text{-}E}$ innerhalb eines Bereichs von -10 bis 5 °C liegt.

3. Reifen (10) für ein zweirädriges Fahrzeug nach Anspruch 1 oder 2, wobei jeder von dem Kautschuk des Mittelabschnitts (15), dem Kautschuk der Schulterabschnitte (18) und dem Kautschuk der Kantenabschnitte (17) Styrol-Butadien-Kautschuk als die Kautschukkomponente enthält.

4. Reifen (10) für ein zweirädriges Fahrzeug nach Anspruch 3, wobei ein gewichtsgemitteltes Molekulargewicht des Styrol-Butadien-Kautschuks des Kautschuks der Kantenabschnitte (17) größer ist als ein gewichtsgemitteltes Molekulargewicht des Styrol-Butadien-Kautschuks des Kautschuks des Mittelabschnitts (15) oder ein gewichtsgemitteltes Molekulargewicht des Styrol-Butadien-Kautschuks des Kautschuks der Schulterabschnitte (18).

5. Reifen (10) für ein zweirädriges Fahrzeug nach einem der Ansprüche 1 bis 4, wobei jeder von dem Kautschuk des Mittelabschnitts (15), dem Kautschuk der Schulterabschnitte (18) und dem Kautschuk der Kantenabschnitte (17) 90 Masseanteile oder mehr eines Füllstoffs auf Grundlage von 100 Masseanteilen der Kautschukkomponente jedes Kautschuks enthält,

der Füllstoff mindestens Siliziumdioxid einschließt, und
ein Gehaltsanteil von Siliziumdioxid auf Grundlage einer Gesamtmenge des Füllstoffs in dem Kautschuk des Mittelabschnitts (15) größer ist ein Gehaltsanteil von Siliziumdioxid auf Grundlage der Gesamtmenge des Füllstoffs in dem Kautschuk des Schulterabschnitts (18).

6. Reifen (10) für ein zweirädriges Fahrzeug nach einem der Ansprüche 1 bis 5, wobei jeder von dem Kautschuk des Mittelabschnitts (15), dem Kautschuk der Schulterabschnitte (18) und dem Kautschuk der Kantenabschnitte (17) das Öl und das Harz in einer Gesamtmenge von 50 bis 150 Masseanteilen auf Grundlage von 100 Masseanteilen der Kautschukkomponente jedes Kautschuks enthält, und
eine Menge nach Anteilen des Harzes auf Grundlage von 100 Masseanteilen der Kautschukkomponente in dem Kautschuk des Mittelabschnitts (15) kleiner ist als eine Menge nach Anteilen des Harzes auf Grundlage von 100 Masseanteilen der Kautschukkomponente in dem Kautschuk der Schulterabschnitte (18).

7. Reifen (10) für ein zweirädriges Fahrzeug nach einem der Ansprüche 1 bis 6, wobei der Kautschuk des Mittelabschnitts (15) wasserhaltiges Silikat enthält, und eine spezifische Oberfläche für die Adsorption von Cetyltrimethylammoniumbromid (CTAB) des wasserhaltigen Silikats 180 $m^2/g$ oder mehr beträgt.

8. Reifen (10) für ein zweirädriges Fahrzeug nach einem der Ansprüche 1 bis 7, wobei jeder von dem Kautschuk des Mittelabschnitts (15), dem Kautschuk der Schulterabschnitte (18) und dem Kautschuk der Kantenabschnitte (17) ein modifiziertes konjugiertes Polymer auf Dien-Grundlage als die Kautschukkomponente enthält.

## Revendications

1. Pneumatique (10) pour un véhicule à deux roues, comprenant une paire de parties de talon (11), une paire de parties de flanc (12) et une partie de bande de roulement (13) en continu avec les deux parties de flanc (12),

la partie de bande de roulement (13) étant divisée en cinq parties dans une surface de la partie de bande de roulement (13) par une partie centrale (15) incluant un plan équatorial du pneumatique (13), une paire de parties de bord (17) incluant des bords respectifs de la bande de roulement (16), et une paire de parties d'épaulement (18) situées entre la partie centrale (15) et les parties de bord respectives (17), dans une direction de la largeur du pneumatique, dans lequel
chacun du caoutchouc de la partie centrale (15), du caoutchouc des parties d'épaulement (18) et du caoutchouc des parties de bord (17) contient un composant de caoutchouc, **caractérisé en ce que**
lorsqu'une température de pointe d'un facteur de dissipation tan $\delta$ du caoutchouc de la partie centrale (15) est représentée par $T_{p-C}$, une température de pointe d'un facteur de dissipation tan $\delta$ du caoutchouc des parties d'épaulement (18) est représentée par $T_{p-S}$, et une température de pointe d'un facteur de dissipation tan $\delta$ du caoutchouc des parties de bord (17) est représentée par $T_{p-E}$, $T_{p-C}$, $T_{p-S}$ et $T_{p-E}$ satisfont la formule (1) ci-dessous :

$$T_{p-S} > T_{p-E} > T_{p-C} \ldots (1),$$

lorsqu'une mesure de la température de pointe d'un facteur de dissipation tan $\delta$ des caoutchoucs est effectuée

en utilisant un spectromètre dynamique dans des conditions de distribution de température de -30 °C à 60 °C, d'une déformation initiale de 10 %, d'une déformation dynamique de 1 %, d'une fréquence de 52 Hz et d'une vitesse d'augmentation de la température de 2 °C/minute.

**2.** Pneumatique (10) pour un véhicule à deux roues selon la revendication 1, dans lequel chacune des $T_{p-C}$, $T_{p-S}$ et $T_{p-E}$ est comprise dans un intervalle allant de -10 à 5° C.

**3.** Pneumatique (10) pour un véhicule à deux roues selon la revendication 1 ou la revendication 2, dans lequel chacun du caoutchouc de la partie centrale (15), du caoutchouc des parties d'épaulement (18) et du caoutchouc des parties de bord (17) contient du caoutchouc styrène-butadiène comme composant de caoutchouc.

**4.** Pneumatique (10) pour un véhicule à deux roues selon la revendication 3, dans lequel un poids moléculaire moyen en poids du caoutchouc styrène-butadiène du caoutchouc des parties de bord (17) est supérieur à un poids moléculaire moyen en poids du caoutchouc styrène-butadiène du caoutchouc de la partie centrale (15) ou à un poids moléculaire moyen en poids du caoutchouc styrène-butadiène du caoutchouc des parties d'épaulement (18).

**5.** Pneumatique (10) pour un véhicule à deux roues selon l'une quelconque des revendications 1 à 4, dans lequel chacun du caoutchouc de la partie centrale (15), du caoutchouc des parties d'épaulement (18) et du caoutchouc des parties de bord (17) contient 90 parties en masse ou plus d'une charge sur la base de 100 parties en masse du composant de caoutchouc de chaque caoutchouc,

la charge inclut au moins de la silice, et
un taux de teneur en silice sur la base d'une quantité totale de la charge dans le caoutchouc de la partie centrale (15) est supérieur à un taux de teneur en silice sur la base de la quantité totale de la charge dans le caoutchouc des parties d'épaulement (18).

**6.** Pneumatique (10) pour un véhicule à deux roues selon l'une quelconque des revendications 1 à 5, dans lequel chacun du caoutchouc de la partie centrale (15), du caoutchouc des parties d'épaulement (18) et du caoutchouc des parties de bord (17) contient de l'huile et une résine en une quantité totale de 50 à 150 parties en masse sur la base de 100 parties en masse du composant de caoutchouc de chaque caoutchouc, et
une quantité en parties de la résine sur la base de 100 parties en masse du composant de caoutchouc dans le caoutchouc de la partie centrale (15) est inférieure à une quantité en parties de la résine sur la base de 100 parties en masse du composant de caoutchouc dans le caoutchouc des parties d'épaulement (18).

**7.** Pneumatique (10) pour un véhicule à deux roues selon l'une quelconque des revendications 1 à 6, dans lequel le caoutchouc de la partie centrale (15) contient du silicate hydraté, et une aire de surface spécifique d'absorption de bromure de cétyltriméthylammonium (CTAB) du silicate hydraté est de 180 $m^2$/g ou plus.

**8.** Pneumatique (10) pour un véhicule à deux roues selon l'une quelconque des revendications 1 à 7, dans lequel chacun du caoutchouc de la partie centrale (15), du caoutchouc des parties d'épaulement (18) et du caoutchouc des parties de bord (17) contient un polymère à base de diène conjugué modifié comme composant de caoutchouc.

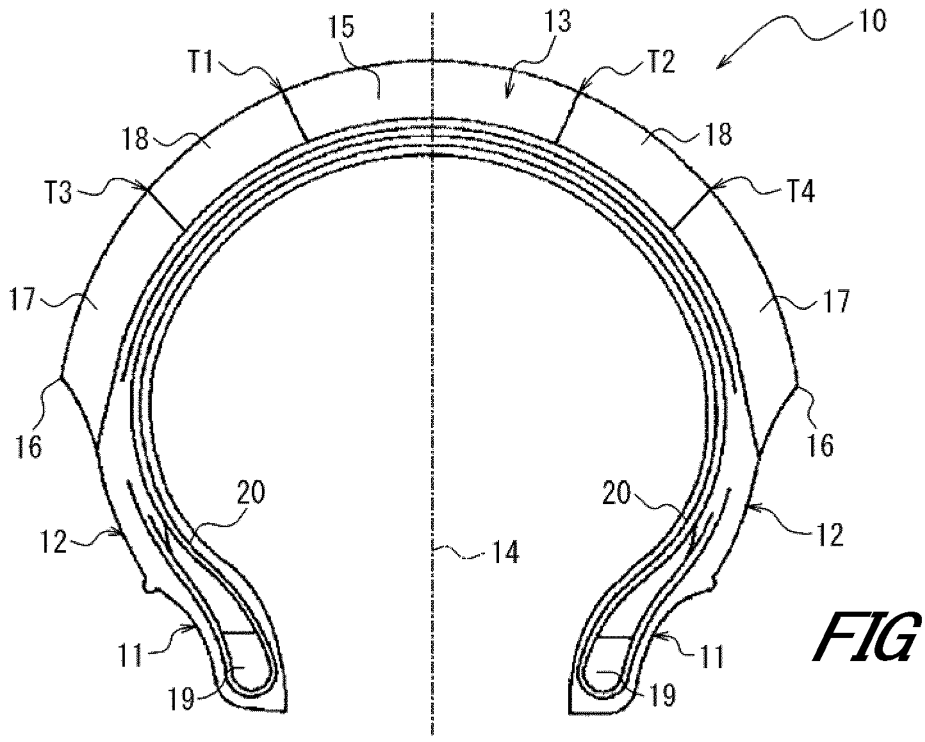
10
15
13
T1
T2
18
18
T3
T4
17
17
16
16
20
20
12
12
14
11
11
19
19

FIG. 1

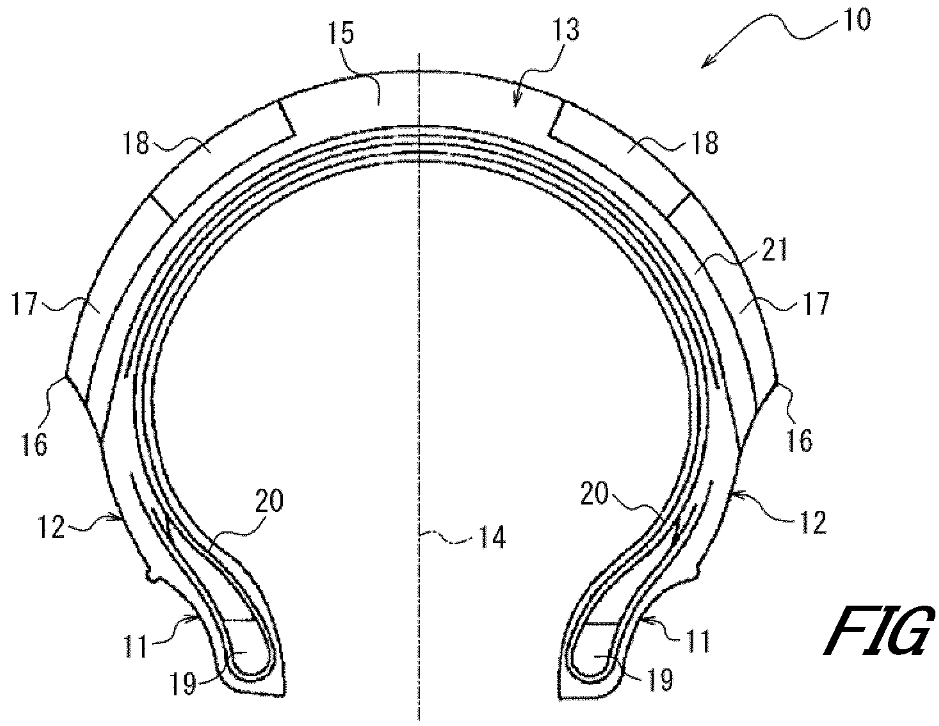
10
15
13
18
18
21
17
17
16
16
20
20
12
12
14
11
11
19
19

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017238109 A
- JP 2016112998 A
- EP 2610077 A1
- EP 2186653 A1
- WO 2017204236 A1
- EP 3098088 A
- WO 2018186367 A